# EUROPEAN PATENT APPLICATION

(11) **EP 4 837 652 A1**
(43) Date of publication of application: **11.11.2026**
(21) Application number: 24915682.9
(22) Date of filing: 02.12.2024
(51) Int. Cl.: B01D 71/52, B01D 69/10, B01D 69/12, B01D 71/38, B01D 71/60, C08G 65/48

(54) **COMPOSITE SEPARATION MEMBRANE AND PRODUCTION METHOD THEREFOR**

(30) Priority: 04.01.2024 JP 2024000080
(71) Applicant: Toyobo Co., Ltd., Kita-ku Osaka-shi, Osaka 530-0001 (JP)
(72) Inventor: OKAME, Takashi, Otsu-shi, Shiga 520-0292 (JP); SHIBUYA, Masafumi, Otsu-shi, Shiga 520-0292 (JP)
(74) Representative: Vossius & Partner Patentanwälte Rechtsanwälte mbB
(86) International application number: PCT/JP2024/042511
(87) International publication number: WO 2025/146759

(57) **Abstract**

An objective of the present invention is to provide a composite separation membrane having excellent resistance to organic solvents and capable of stable separation even in an organic solvent, and a method for conveniently producing the composite separation membrane. The composite separation membrane according to the present invention is characterized in comprising a support membrane and a separation functional layer, wherein the support membrane comprises a modified polyphenylene oxide, the separation functional layer comprises a crosslinked cationic polymer, the modified polyphenylene oxide comprises a sulfonic acid group and/or a sulfate group, and a polar group, and the separation functional layer is placed on the support membrane.

## Description

### TECHNICAL FIELD

The present invention relates to a composite separation membrane by which stable separation is possible even in an organic solvent, and a method for easily producing the composite separation membrane.

### BACKGROUND ART

The separation operation using an organic solvent as a medium is indispensable in many industrial fields such as the chemical industry, pharmaceutical industry and petrochemical industry, and a distillation process is widely employed. Although distillation is a highly reliable technique, the high energy consumption and large carbon dioxide emission burden by distillation have become social issues.

The separation operation using a membrane has the advantage that the energy required for separation can be significantly reduced in comparison with a distillation method, since no phase transition is involved. In addition, a membrane separation operation is also suitable for the purification of substances that are susceptible to thermal degradation, since the process does not require heating. Accordingly, membrane technologies have been applied in a wide range of industrial fields such as seawater desalination, drinking water treatment, wastewater treatment and blood purification.

Water is used as a medium in most cases in conventional membrane separation. However, if membrane separation is feasible in an organic solvent system, the range of applicable fields can be significantly expanded.

A method for separating, purifying or concentrating molecules having different sizes in the range of several angstroms to several nanometers using a membrane with an organic solvent as a medium is referred to as organic solvent nanofiltration (OSN) or organic solvent reverse osmosis (OSRO). As a problem of this method, the change in pore size due to swelling of a membrane and deterioration of performance over time caused by an organic solvent tend to occur in the case of an organic polymer-based separation membrane. Accordingly, there is a demand for a nanofiltration membrane and a reverse osmosis membrane that enable highly precise molecular fractionation with long-term stability.

A composite membrane structure is preferred as a configuration of a separation membrane used for OSN or OSRO from the viewpoint of achieving both an excellent molecular fractionation property and high permeation flux. In general, a porous membrane having solvent resistance is selected as a support membrane, and a method in which a three-dimensionally crosslinked polymer thin membrane is formed as a separation functional layer on the support membrane is employed. An example of a method for forming a separation functional layer includes interfacial polymerization, coating method and polymer adsorption method based on Layer-by-Layer (LbL) assembly. These methods are suitable for forming a thin membrane having pore sizes on the order of several angstroms with few defects. Among these methods, LbL is promising as a candidate for a separation layer of composite membranes in OSN or OSRO, since LbL enables formation of a separation layer by a simple treatment in which the membrane surface is brought into contact with an aqueous solution of a polymer electrolyte. Accordingly, there is a demand for an LbL-assembled adsorption layer that exhibits excellent permeation selectivity and long-term stability in an organic solvent system.

It is required that the raw material for a support membrane in polymer-based composite membranes be easy to form into a membrane and has resistance to various organic solvents. In addition, it is desirable that the material be resistant to attack by acids and bases in separation processes in the pharmaceutical and fine chemical industries, since it is often necessary to treat solvents containing high concentrations of acids or bases. A crosslinked product of amorphous polymers such as polyimide and polybenzimidazole has been studied as a conventional material for a solvent-resistant membrane. The membrane composed of a semicrystalline polymer such as polyether ether ketone and polyphenylene sulfide has also been investigated. Among these materials, polyimide and polybenzimidazole may exhibit insufficient performance in some cases from the viewpoint of resistance to hydrolysis by acids or alkalis. A semicrystalline polymer such as polyether ether ketone and polyphenylene sulfide exhibits excellent resistance to hydrolysis, but may be difficult to form into a membrane, since a semicrystalline polymer is dissolved only in very limited solvents such as sulfuric acid or is not dissolved at all.

A separation membrane formed from polyphenylene oxide (PPO) or a derivative thereof is known to have excellent mechanical strength as well as alkali resistance and acid resistance. In addition, although PPO is an amorphous polymer, PPO exhibits resistance to an aprotic polar solvent such as N-methyl-2-pyrrolidone (NMP) and dimethyl sulfoxide (DMSO); therefore, PPO is considered to have excellent potential as a membrane material applicable to filtration processes using such a neat solvent as a medium as well as to an organic solvent filtration process using an alkali or an acid.

As an example of a composite membrane utilizing LbL, the inventors of the present invention have developed a composite membrane that exhibits excellent permeation selectivity in nanofiltration or reverse osmosis separation by sulfonating the surface of a PPO membrane with sulfuric acid to produce an anionic membrane surface, and then adsorbing and crosslinking a separation functional layer of a cationic polyvinyl alcohol (Patent Document 1).

### PRIOR ART DOCUMENT

### PATENT DOCUMENT

Patent document 1: JP 7226569 B

### DISCLOSURE OF THE INVENTION

### PROBLEMS TO BE SOLVED BY THE INVENTION

As described above, the composite separation membrane using a PPO membrane as a support membrane and exhibiting excellent permeation selectivity has been developed.

However, it is considered that further improvement in the resistance of a composite separation membrane to organic solvents would significantly broaden the fields of application.

Accordingly, an objective of the present invention is to provide a composite separation membrane having excellent resistance to organic solvents and capable of stable separation even in an organic solvent, and a method for conveniently producing the composite separation membrane.

### MEANS FOR SOLVING THE PROBLEMS

The inventors of the present invention conducted extensive studies to solve the above-described problems. As a result, the inventors completed the present invention by finding that the resistance of an asymmetric membrane produced by forming a separation functional layer on a support membrane to an organic solvent is significantly improved by introducing a polar group in addition to a sulfonic acid group/a sulfate group into the support membrane.

Hereinafter, the present invention is described.
[1] A composite separation membrane,
   comprising a support membrane and a separation functional layer,
   wherein the support membrane comprises a modified polyphenylene oxide,
   the separation functional layer comprises a crosslinked cationic polymer,
   the modified polyphenylene oxide comprises a sulfonic acid group and/or a sulfate group, and a polar group, and
   the separation functional layer is placed on the support membrane.
[2] The composite separation membrane according to the above [1], wherein the benzene ring of the modified polyphenylene oxide is substituted with the polar group and the sulfonic acid group and/or the sulfate group through a linker group.
[3] The composite separation membrane according to the above [2], wherein the benzene ring of the modified polyphenylene oxide is substituted with a sulfomethyl group.
[4] The composite separation membrane according to any one of the above [1] to [3], wherein the polar group is 1 or more polar groups selected from a hydroxy group, an ether group, a sulfonyl group and an amino group.
[5] The composite separation membrane according to any one of the above [1] to [4], wherein the cationic polymer is a cationic poly(vinyl alcohol) copolymer comprising a constitutional unit having a quaternary ammonium cationic group.
[6] The composite separation membrane according to any one of the above [1] to [4], wherein the cationic polymer is 1 or more polyamines selected from a polyethyleneimine, a polyvinylamine and a polyallylamine.
[7] A method for producing a composite separation membrane, the method comprising the steps of:
   preparing a support membrane using polyphenylene oxide,
   introducing a sulfonic acid group and/or a sulfate group into the support membrane by contacting the support membrane with a sulfonating agent,
   forming a cationic polymer layer on the support membrane by contacting the support membrane having the sulfonic acid group and/or the sulfate group with an aqueous solution comprising a cationic polymer,
   crosslinking the cationic polymer in the cationic polymer layer, and
   introducing a polar group into the polyphenylene oxide in the support membrane.
[8] The method according to the above [7], wherein the sulfonic acid group is introduced into a halomethyl group by contacting the support membrane comprising the polyphenylene oxide wherein the halomethyl group is introduced into the benzene ring with an aqueous solution comprising a sulfite salt as the sulfonating agent.
[9] The method according to the above [7], wherein the polar group is introduced by reacting the polyphenylene oxide wherein a halomethyl group is introduced into the benzene ring with a monoethanolamine represented by the following formula (IV) : 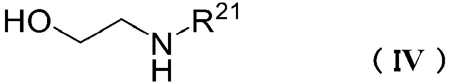 wherein R²¹ is H or a C₁₋₆ alkyl group.
[10] Use of a composite separation membrane for treating a feed solution by passing the feed solution through the composite separation membrane,
   wherein the composite separation membrane comprises a support membrane and a separation functional layer,
   the support membrane comprises a modified polyphenylene oxide,
   the separation functional layer comprises a crosslinked cationic polymer,
   the modified polyphenylene oxide comprises a sulfonic acid group and/or a sulfate group, and a polar group, and
   the separation functional layer is placed on the support membrane.
[11] The use according to the above [10], wherein the feed solution comprises an organic solvent.
[12] The use according to the above [10] or [11], wherein the benzene ring of the modified polyphenylene oxide is substituted with the polar group and the sulfonic acid group and/or the sulfate group through a linker group.
[13] The use according to the above [12], wherein the benzene ring of the modified polyphenylene oxide is substituted with a sulfomethyl group.
[14] The use according to any one of the above [10] to [13], wherein the polar group is 1 or more polar groups selected from a hydroxy group, an ether group, a sulfonyl group and an amino group.
[15] The use according to any one of the above [10] to [14], wherein the cationic polymer is a cationic poly(vinyl alcohol) copolymer comprising a constitutional unit having a quaternary ammonium cationic group.
[16] The use according to any one of the above [10] to [14], wherein the cationic polymer is 1 or more polyamines selected from a polyethyleneimine, a polyvinylamine and a polyallylamine.

### EFFECT OF THE INVENTION

The composite separation membrane of the present invention exhibits excellent durability against organic solvents. In addition, the composite separation membrane of the present invention also exhibits excellent acid resistance and alkali resistance, since the support membrane of the composite separation membrane is composed of modified polyphenylene oxide. Therefore, the composite separation membrane of the present invention is industrially very excellent, since the composite separation membrane can be applied to filtration, reverse osmosis separation or the like in not only an aqueous system but also an organic solvent system.

### BRIEF DESCRIPTION OF THE DRAWINGS

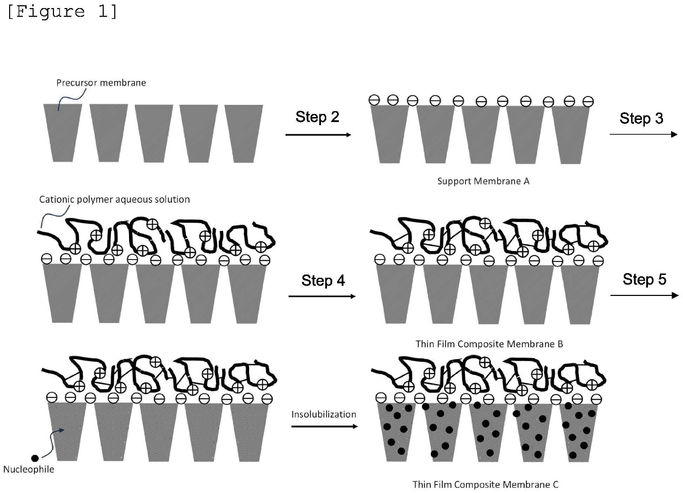

[Figure 1] Figure 1 represents the schematic views of each step of producing the composite separation membrane of the present invention and the membrane structure in each step.

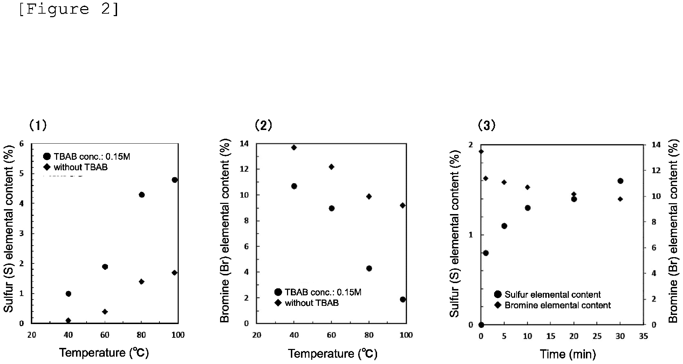

[Figure 2] Figure 2(1) is a graph showing the relationship between reaction temperature and sulfur elemental content in the case where the reaction time was fixed at 30 minutes and a phase-transfer catalyst (TBAB) was used or not used; Figure 2(2) is a graph showing the relationship between reaction temperature and bromine elemental content in the case where the reaction time was fixed at 30 minutes and a phase-transfer catalyst (TBAB) was used or not used; and Figure 2(3) is a graph showing the relationship between reaction time and sulfur elemental content (left axis) or bromine elemental content (right axis) in the case where the reaction temperature was fixed at 98°C and a phase-transfer catalyst (TBAB) was not used.

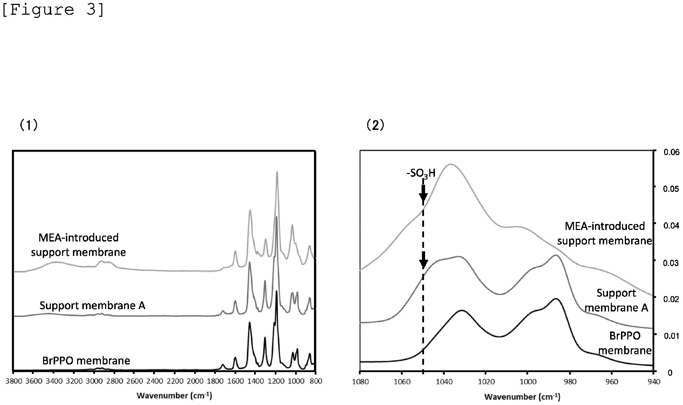

[Figure 3] Figure 3(1) represents the results of infrared absorption spectroscopy analysis of a BrPPO membrane having bromomethyl groups, a sulfonated support membrane A, and a support membrane in which separation functional layer was not formed and MEA was introduced after sulfonation; and Figure 3(2) is an enlarged view around 1000 cm⁻¹.

### MODE FOR CARRYING OUT THE INVENTION

Hereinafter, a method for producing the composite separation membrane of the present invention is first described for each step. The present invention is not restricted to the specific examples described below. In this disclosure, the term "a sulfonic acid group and/or a sulfate group" means one or more groups selected from the group consisting of a sulfonic acid group and a sulfate group, and may be abbreviated as "a sulfonic acid group/a sulfate group" in some cases.

### 1. Membrane-forming Step

A support membrane is produced using polyphenylene oxide in this step. Hereinafter, polyphenylene oxide is abbreviated as "PPO". PPO is a polymer having the following constitutional unit (I). For example, poly(2,6-dimethyl-1,4-phenylene oxide) having the following constitutional unit (I¹) is widely used. In addition, from the viewpoint of ease of introducing sulfonic acid groups, PPO having the following constitutional unit (I²) in which a halogenomethyl group is substituted may also be used as a raw material. 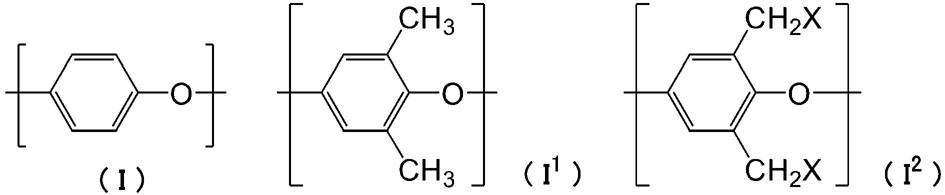 wherein X is a halogeno group selected from chloro, bromo and iodo; and is preferably bromo, since bromo has high leaving ability and is inexpensive and easy to handle.

The physical properties of the raw material PPO are not particularly restricted, and a desired PPO may be appropriately synthesized or a PPO product may be appropriately selected. For example, the weight average molecular weight of PPO is preferably 5,000 or more from the viewpoint of imparting sufficient viscosity to a membrane-forming solution to improve coatability and spinnability and to ensure membrane strength. In addition, the weight average molecular weight of PPO is preferably 500,000 or less from the viewpoint of handleability such as solubility. The weight average molecular weight is more preferably 10,000 or more and preferably 400,000 or less.

PPO in which a methyl group or a halomethyl group is introduced in the benzene ring may be used as the raw material PPO. A benzyl cation is stabilized by conjugation with the benzene ring, and PPO having a methyl group or a halomethyl group introduced in the benzene ring exhibits high reactivity. For example, poly(2,6-dimethyl-1,4-phenylene oxide) is commercially available.

A halogeno group can be readily introduced in a methyl group substituted in a benzene ring of PPO. One or more halogeno groups selected from chloro, bromo and iodo may be used as the halogeno group. Bromo can be preferably used, since bromo has high leaving ability and is inexpensive and easy to handle.

The methyl group substituted in the benzene ring of PPO can be halogenated in accordance with a conventional method. For example, a halogenating agent may be added to a solution of PPO having a methyl group. An example of the solvent includes a halogenated aliphatic hydrocarbon solvent such as dichloromethane, chloroform and carbon tetrachloride; a halogenated aromatic hydrocarbon solvent such as chlorobenzene; and an aromatic hydrocarbon solvent such as benzene and toluene. Since the solvents have low halogen solubility and can suppress the concentration of halogen in the reaction system to a low level, the halogenation at the benzylic position is preferentially promoted. On the one hand, it is known that when a polar solvent such as acetonitrile is used, the halogenation in the benzene ring is preferentially promoted. However, even when the above-exemplified solvents are used, there is a possibility that the benzene ring is directly halogenated in addition to the benzylic position. A halogenated aromatic hydrocarbon solvent such as chlorobenzene is preferred from the viewpoint of handleability.

For example, an N-halogenosuccinimide such as N-bromosuccinimide or a halogen molecule can be used as the halogenating agent.

The condition for halogenation may be appropriately adjusted. For example, it is preferred to carry out the reaction under an inert atmosphere such as argon or nitrogen at 110°C or higher for 3 hours or longer. A higher reaction temperature increases the selectivity of halogenation at the benzylic position. It is preferred to perform the halogenation reaction at a temperature of 115°C or higher and lower than 135°C from the viewpoint of suppressing a side reaction.

The halogenated PPO may be purified in accordance with a conventional method after completion of the reaction. For example, a poor solvent may be added to the reaction solution after the reaction to precipitate the halogenated PPO, and the halogenated PPO is filtered, washed with a poor solvent and then dried. An example of the poor solvent includes an alcohol solvent such as methanol and ethanol, and a ketone solvent such as acetone and methyl ethyl ketone. The use of methanol is simple and preferred.

For example, the degree of halogenation at the benzylic position of PPO can be determined by nuclear magnetic resonance (NMR) spectroscopy using deuterated chloroform as a solvent in this disclosure. The example of the chemical structure of halogenated PPO is shown below. However, the halogenated PPO may also include the constitutional unit having no halogeno group, i.e. the constitutional unit in which R¹ to R⁸ are all hydrogen atoms. Various constitutional units may be generated depending on the degree of halogenation in the benzene ring and the degree of halogenation at the benzylic position, and the abundance ratio of each constitutional unit can be determined based on characteristic peaks observed in NMR. For example, detailed constitutional unit can also be identified using heteronuclear single quantum coherence (HSQC) spectroscopy. 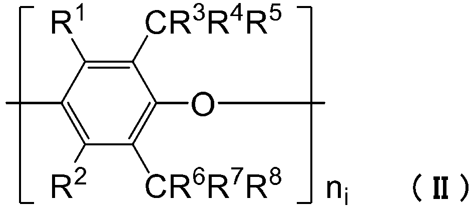 wherein
R¹ to R⁸ each is independently a halogeno group or H,
R¹ and R² are halogeno groups in the benzene ring,
R³ to R⁸ are halogeno groups at the benzylic position,
i is an integer of 1 or more and k or less, indicating the i-th structure among k unit structures identified by NMR, and
nᵢ is the value of 0 or more and 1 or less, indicating the molar fraction of the i-th structure among the k types of unit structures.

In the present invention, the degree of halogenation, "D_{Hal}", is defined by the average number of halogen atoms substituted at benzylic positions per constitutional unit, and is represented by the following formula (1). For example, the number of benzylic hydrogens that can undergo substitution is six in the case of PPO having two methyl groups at the 2-position and the 6-position in the constitutional unit; therefore, D_{Hal} can take a value of 0 or more and 6.0 or less. However, one hydrogen per one methyl group is substituted with a halogeno group in most cases, and the cases in which two hydrogens per one methyl group are substituted with halogeno groups may also exist in a certain amount, as far as the present inventors are aware. On the one hand, no cases were observed in which three hydrogens per one methyl group were substituted with halogeno groups. 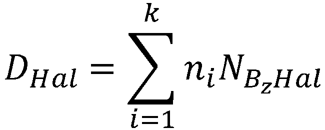 wherein N_{i_BzHal} is the number of the halogeno group at the benzylic position in each constitutional unit of the above formula (II), and nᵢ is the molar fraction of each constitutional unit of the above formula (II).

The average number of the halogeno group substituted in the benzene ring per the constitutional unit is expressed by the following formula (2). 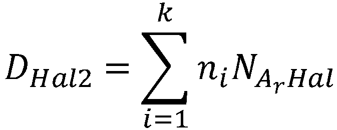 wherein N_{i_ArHal} is the number of the halogeno group substituted in the benzene ring in each constitutional unit of the above formula (II), and nᵢ is the molar fraction of each constitutional unit of the above formula (II).

The halogenation degree at the benzyl position, "D_{Hal}", is preferably 0.5 or more and 2.0 or less. When D_{Hal} is 0.5 or more, it can be said that the methyl group in the benzene ring of the PPO is sufficiently halogenated, so that the methyl group is more susceptible to attack by a nucleophilic agent described later, and as a result, the hydrophilicity and solvent resistance of the modified PPO are more reliably improved. When the halogenation degree, D_{Hal}, is 2.0 or less, it is not necessary to use an excessive amount of a halogenating agent, and thus this case is economical and a side reaction such as a crosslinking reaction during the reaction can be sufficiently suppressed.

The degree halogenation of the benzene ring, "D_{Hal2}", is not particularly restricted in this disclosure and is preferably 0 or more and 1.0 or less. When D_{Hal2} is 1.0 or less, an excessive relative decrease in the degree of halogenation at the benzyl position, Dₕₐₗ, can be suppressed, and it is not necessary to use an excessive amount of a halogenating agent and thus this case is economical. Furthermore, the solvent resistance of the modified PPO can be more reliably ensured. Although a lower D_{Hal2} is preferred, D_{Hal2} is practically 0 or more. Depending on the reaction condition, the constitutional units in which both halogenation in the benzene ring and halogenation at the benzyl position occur may also be present.

A support membrane is produced from a raw-material PPO in this step. As the raw material PPO, an unsubstituted PPO may be used as described above, or a PPO having a methyl group in the benzene ring, such as poly(2,6-dimethyl-1,4-phenylene oxide), may be used, or a PPO having a halomethyl group in the benzene ring may be used. However, it is preferable not to use a PPO into which a sulfonic acid group and/or a sulfate group has been introduced as the raw material. The introduction of a sulfonic acid group and/or a sulfate group may reduce the solubility of PPO and make membrane formation difficult. In addition, a larger amount of a sulfonic acid group and/or a sulfate group can be introduced onto the surface of the support membrane by introducing a sulfonic acid group and/or a sulfate group after membrane formation, thereby improving the efficiency of adsorption of a cationic polymer.

The form of the support membrane is not particularly restricted. For example, the form may be a flat-sheet membrane or a hollow-fiber membrane.

For example, the support membrane can be produced by applying a solution of the raw material PPO onto a base material such as a nonwoven fabric or a filter using a doctor blade or the like, followed by drying. The solvent for dissolving the raw material PPO is not particularly restricted as long as the solvent can satisfactorily dissolve the PPO, and an example thereof includes a water-miscible organic solvent such as an amide solvent. An example of an amide solvent includes N-methylpyrrolidone, dimethylacetamide and dimethylformamide. Since the support membrane needs to be porous with interconnected pores in order to be used as a separation membrane, a water-soluble pore-forming agent may be added to the raw-material PPO solution. An example of the pore-forming agent includes polyethylene glycol, glycerin, polypropylene glycol, a nonionic surfactant and an ionic surfactant.

The base material is not particularly restricted as long as the base material has excellent solvent resistance and can satisfactorily support the support membrane. An example thereof includes nonwoven fabrics composed of a material having excellent solvent resistance, such as polyethylene terephthalate, polyethylene, polypropylene and polyphenylene sulfide. Polyphenylene sulfide (PPS) is preferred as the raw material of the base material. PPS has excellent solvent resistance and also exhibits superior resistance to an alkali and an acid. After applying the raw material PPO solution onto the base material, the support membrane can be obtained by immersing the coated base material in a coagulation bath containing a nonsolvent such as water. When a hollow fiber membrane is produced, the raw material PPO solution is extruded together with an internal liquid through a double-annular nozzle and immersed in a coagulation bath. The base material may be peeled off from the support membrane after formation of the support membrane, or may be used as part of the composite separation membrane without being removed.

In the above membrane-forming step, conditions such as the PPO concentration in the raw material PPO solution, the extruding temperature, the temperature and composition of the coagulation bath, and the conveying speed of the support membrane may be appropriately set based on known findings. The porosity of the support membrane can be adjusted by controlling the concentration of the pore-forming agent in the raw material PPO solution.

A conventional post-treatment may be performed after the reaction. For example, the solvent can be removed and the pore-forming agent can also be removed to render the support membrane porous by sufficiently washing the support membrane with water.

### 2. Step of introducing sulfonic acid group/ sulfate group

A sulfonic acid group (-SO₃H) and/or a sulfate group (-OSO₃ H) is introduced into the support membrane produced in the above-described Step 1 by bringing the support membrane into contact with a sulfonating agent in this step. The sulfonic acid group/the sulfate group include ionized -SO₃⁻/-OSO₃⁻ and salts thereof represented by -SO₃⁻M⁺/-OSO₃⁻M⁺ wherein M is a metal ion such as Na⁺ and K⁺ in this disclosure. In addition, introduction of a sulfonic acid group/a sulfate group may be referred to as "sulfonation". A negative charge is imparted by sulfonating the surface of the support membrane in this step (see Figure 1).

The condition for introducing a sulfonic acid group into at least the surface of the support membrane is not particularly restricted. For example, the support membrane produced in the above-described Step 1 may be immersed in an aqueous solution of a nucleophilic sulfonating agent such as a sulfite salt as a sulfonating agent, whereby the halogeno group of a halomethyl group is particularly substituted with a sulfonic acid group via an S_{N}2 mechanism as shown in the reaction scheme below. In such a case, a sulfonic acid group may be introduced preferentially onto the outer surface of the support membrane, and the surface inside the membrane, that is, the pore surface, may also be sulfonated. Nevertheless, since PPO inside the support membrane is considered to be substantially not sulfonated or only minimally sulfonated, the membrane surface can be sulfonated without reducing the overall mechanical strength of the support membrane. When a sulfite salt is used, it is considered that a sulfonic acid group is mainly introduced and the possibility that a sulfate group is introduced cannot be excluded.

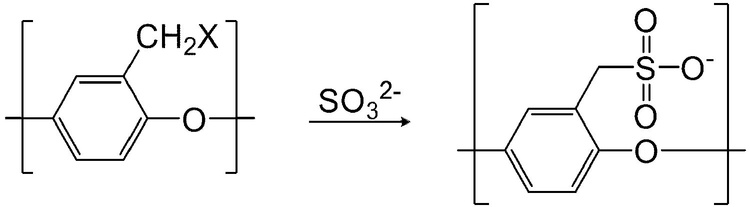

An example of a sulfite salt includes sodium sulfite and potassium sulfite. The concentration of the aqueous sulfite salt solution may be 5 mass% or more and is preferably 10 mass% or more. The reaction temperature is preferably from atmospheric temperature to lower than 100°C. The sulfonation reaction tends to be accelerated under higher reaction temperature. The reaction time may be determined in an appropriate combination with the reaction temperature. It is preferred to add an appropriate amount of a phase transfer catalyst to the reaction solution, since the sulfonation reaction on the surface of the support membrane is thereby accelerated. A phase transfer catalyst is not particularly restricted, and an example thereof includes a quaternary ammonium salt, a phosphonium salt, polyethylene glycol and a crown ether. For example, tetrabutylammonium bromide (TBAB) is preferred.

When sulfuric acid, fuming sulfuric acid, chlorosulfonic acid, sulfur trioxide or the like is used as the sulfonating agent, the benzene ring of the PPO may be mainly directly sulfonated and sulfonation at the benzylic position may also occur. When a PPO having a hydroxy group or a hydroxymethyl group substituted in the benzene ring is used as the starting PPO, a sulfate group may be introduced at the benzylic position. An example of a constitutional unit of the sulfonated modified PPO is shown below. 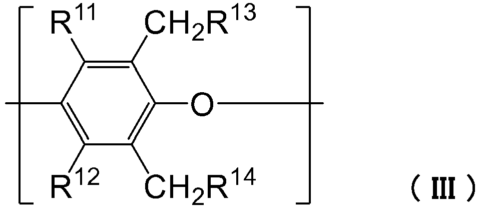 wherein
R¹¹ to R¹⁴ are independently a sulfonic acid group, a sulfate group or H,
R¹¹ and/or R¹² is a sulfonic acid group or a sulfate group in the benzene ring,
R¹³ and/or R¹⁴ is a sulfonic acid group or a sulfate group at the benzylic position, and
at least one or more of R¹¹ to R¹⁴ are a sulfonic acid group or a sulfate group.

A conventional post-treatment may be carried out after completion of the reaction. For example, the sulfonated support membrane may be sufficiently washed with water to remove the sulfonating agent and the like. The support membrane is substantially composed of sulfonated modified PPO. The phrase "composed of sulfonated modified PPO" means that the support membrane is not intentionally made to contain components other than the sulfonated modified polyphenylene oxide, although an unintended residual component such as a solvent, a pore-forming agent and a sulfonating agents or an unintended contaminant may be contained.

The thickness of the support membrane is preferably 10 µm or more and 100 µm or less. When the thickness of the support membrane is 10 µm or more, sufficient mechanical strength can be ensured and the generation of a defect can be more reliably suppressed. When the thickness of the support membrane is 100 µm or less, permeation resistance can be sufficiently reduced.

### 3. Separation functional layer formation step

In this step, the sulfonated support membrane produced in the above-described Step 2 is brought into contact with an aqueous solution containing a cationic polymer, thereby forming a cationic polymer layer that functions as a separation functional layer on the sulfonated support membrane. The support membrane produced in the preceding step, of which at least the surface has been sulfonated, possesses a strongly negatively charged surface due to the presence of a sulfonic acid group and/or a sulfate group, and simultaneously exhibits high hydrophilicity. As a result, a cationic polymer layer that functions as a separation functional layer can be successfully formed on the sulfonated support membrane by bringing the sulfonated support membrane into contact with an aqueous solution containing a cationic polymer (Figure 1).

The cationic polymer is not particularly restricted as long as the cationic polymer has a cationic group and is capable of being adsorbed onto the surface of the support membrane having a sulfonic acid group and/or a sulfate group as an anionic group at least on the surface thereof to form a layer through an ion-exchange reaction and electrostatic interaction. An example of such a cationic polymer includes polyethyleneimine, polyallylamine, polyvinylamine and cationic polyvinyl alcohol. A cationic polyvinyl alcohol having a quaternary ammonium group is particularly preferably used from the viewpoints of chemical stability, formation of a thin film free from defects, and attainment of high permeation selectivity in an organic solvent system.

The concentration of the aqueous solution of the cationic polymer may be appropriately adjusted within a range that allows a cationic polymer layer to be successfully formed on the support membrane, and may be adjusted, for example, to 0.01 mass% or more and less than 1 mass%. It is also preferred to add an inorganic salt to the aqueous solution to adjust the ionic strength depending on the charge density and the degree of ion dissociation of the cationic polymer.

The condition for forming the cationic polymer layer may be appropriately adjusted. For example, the support membrane may be immersed in an aqueous solution of the cationic polymer. The temperature during the immersion is not particularly restricted; however, atmospheric temperature is sufficient in order to adsorb the cationic polymer onto the surface of the support membrane through an ion-exchange reaction and electrostatic interaction. The immersion time may also be appropriately adjusted, and may be, for example, 1 minute or more and 10 hours or less.

One or more additional anionic polymer layers or zwitterionic polymer layers, and cationic polymer layers may be alternatively formed a plurality of times by a known alternate adsorption method (Layer-by-Layer (LbL) method) after forming the cationic polymer layer on the support membrane.

When the support membrane is immersed in the cationic polymer aqueous solution, the cationic polymer in the aqueous solution may be adsorbed onto the sulfonic acid group and/or the sulfate group, which are anionic groups present on the surface of the support membrane, through an ion-exchange reaction and electrostatic interaction. After the cationic polymer layer is formed, the support membrane with the cationic polymer layer on its surface may be withdrawn from the aqueous solution. The support membrane with the cationic polymer layer may then be washed with water or the like and optionally dried.

The thickness of the cationic polymer layer may be appropriately adjusted. For example, the thickness may be 1 nm or more and 100 nm or less. The thickness is preferably 5 nm or more, more preferably 10 nm or more, and preferably 50 nm or less, more preferably 30 nm or less. The cationic polymer layer is expected to be formed through an ion-exchange reaction and an electrostatic interaction, and thus particular confirmation of the formation is not necessary. However, if needed, the amount of the adsorbed cationic polymer can be calculated from the difference in the concentration of the cationic polymer in the aqueous solution before and after the immersion of the support membrane in the cationic polymer aqueous solution.

### 4. Crosslinking step of cationic polymer

In this step, the cationic polymer in the cationic polymer layer formed on the support membrane is crosslinked, thereby rendering the cationic polymer insoluble and fixing the cationic polymer layer onto the support membrane (Figure 1).

The crosslinking agent for crosslinking the cationic polymer is not particularly restricted as long as the crosslinking agent can react with two or more active groups such as an amino group and a hydroxy group present in the cationic polymer to crosslink either intramolecularly or intermolecularly. An example of such a crosslinking agent includes an aldehyde-type crosslinking agent such as glutaraldehyde, formaldehyde, glyoxal and succinaldehyde; an epoxy-type crosslinking agent having two or more epoxy groups; and an N-methylol-type crosslinking agent such as dimethylolurea, trimethylolmelamine, dimethylolethyleneurea, hexamethylolmelamine and dimethylolpropyleneurea. Glutaraldehyde can be used preferably.

The condition for crosslinking the cationic polymer can be appropriately adjusted. For example, the composite membrane comprising the support membrane and the cationic polymer layer may be immersed in a solution of the crosslinking agent. The solvent of the crosslinking agent solution can be appropriately selected depending on the crosslinking agent to be used. For example, water can be used. The concentration of the crosslinking agent in the solution may be appropriately adjusted, and may be adjusted, for example, to 0.1% or more by mass and 10% or less by mass. The temperature during the immersion is not particularly restricted and can be appropriately adjusted depending on the crosslinking agent to be used. For example, the temperature may be adjusted to 20°C or higher and the boiling point of the solvent or lower. The crosslinking may also be carried out with heating under reflux condition of the solvent. The crosslinking time may be appropriately adjusted. For example, the time may be adjusted to 30 minutes or more and 50 hours or less.

The Step 4, i.e. the crosslinking of the cationic polymer, may be carried out after the formation of the separation functional layer in the Step 3, or may be carried out simultaneously with the formation of the separation functional layer in the Step 3. When the Step 3 and the Step 4 are carried out simultaneously, the crosslinking agent may be mixed into the cationic polymer aqueous solution described in the Step 3, and the reaction temperature and reaction time may be adjusted so that the formation of the cationic polymer layer on the support membrane and the crosslinking occur concurrently. In addition, a rinsing treatment with pure water or the like may be performed between the Step 3 and the Step 4.

### 5. Step of introducing polar group

In this step, a polar group is further introduced in the sulfonated modified PPO of the support membrane in addition to the sulfonic acid group and/or the sulfate group. When PPO is sulfonated only, it is difficult to introduce a sufficient amount of a sulfonic acid group and/or a sulfate group to adequately improve the solvent resistance of the PPO. According to the present invention, the overall solvent resistance of PPO can be further enhanced by further introducing a polar group in addition to the sulfonic acid group and/or the sulfate group (Figure 1).

The Step 5 can be carried out after the introduction of a sulfonic acid group and/or a sulfate group in the Step 2. In other words, the solvent resistance of the PPO can be improved without inhibiting the introduction of a sulfonic acid group and/or a sulfate group by introducing a polar group after sulfonating the PPO in the support membrane.

The Step 5 may also be carried out not only after the crosslinking of the cationic polymer in the Step 4 but also between the Step 2 of introducing a sulfonic acid group and/or a sulfate group and the Step 3 of forming the separation functional layer, or between the Step 3 of forming the separation functional layer and the Step 4 of crosslinking the cationic polymer. In other words, a polar group is introduced in addition to a sulfonic acid group and/or a sulfate group into the support membrane, and then a cationic polymer layer may be formed on the support membrane; a cationic polymer layer is formed on the sulfonated support membrane, and then a hydrophilic group may be introduced into the support membrane and a cationic polymer layer may be further crosslinked; and alternatively, the cationic polymer layer on the support membrane is crosslinked, and then a polar group may be introduced into the support membrane.

A "polar group" means a group that imparts insolubility or resistance to a nonpolar organic solvent or a low-polarity organic solvent due to its polarity by having a lone pair of electrons or being polarized within the group. The polar group is not particularly restricted as long as the polar group exhibits such effects and is other than a sulfonic acid group and a sulfate group. An example thereof includes a monovalent polar group such as a hydroxy group, -NH₂ and a carboxyl group; and a divalent polar group such as an ether group (-O-), a thioether group (-S-), a sulfinyl group (-S(=O)-), a sulfonyl group (-S(=O)₂-), a carbonyl group and -NR⁹- wherein R⁹ is H or a C₁₋₆ alkyl group. One or more polar groups selected from a hydroxy group, an ether group, a sulfonyl group and -NR⁹- are preferred. For example, a monovalent polar group may be covalently bonded directly or indirectly via a linker group to a constitutional unit of the modified polyphenylene oxide, and a divalent polar group may crosslink two constitutional units within a single molecule of the modified polyphenylene oxide either alone or via a linker group or may crosslink two molecules. A sulfonic acid group/a sulfate group is not included in a polar group for convenience purposes in this disclosure.

The polar group and the sulfonic acid group/the sulfate group may be bonded to the benzene ring of PPO via a linker group. The linker group increases the steric freedom of the polar group and the like, and facilitates the introduction of the polar group into PPO. The linker group is not particularly restricted as long as the linker group can achieve the effects. An example thereof includes a C₁₋₆ alkylene group, a divalent C₆₋₁₂ aromatic hydrocarbon group, an ester group (-O-C(=O)- or -C(=O)-O-), an amide group (-NH-C(=O)- or -C(=O)-NH-), a urea group (-NH-C(=O)-NH-), a thiourea group (-NH-C(=S)-NH-) and a group in which 2 or more and 5 or less of the groups are linked together.

The polar group can be introduced into the modified PPO by a conventional method. For example, a polar group is preferably introduced in the modified PPO having a halomethyl group to impart resistance to an organic solvent by immersing the modified PPO in a solution of a nucleophilic agent having a polar group to substitute the residual benzyl halogen atom that has not undergone sulfonation in the support membrane with the nucleophilic agent. An example of a nucleophilic agent to introduce a polar group includes an amine, a phenolate and a sulfinate. An example of such an amine to be used includes a monofunctional amine, a bifunctional amine and a polyfunctional amine. A monofunctional amine having a small molecular weight is preferred from the viewpoint of the sufficient penetrating property into the interior of the membrane and the enhanced resistance to an organic solvent, and the monoethanolamine represented by the following formula (IV) is preferred. 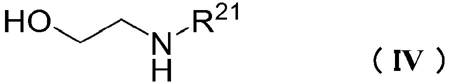 wherein R²¹ is H or a C₁₋₆ alkyl group.

For example, the modified PPO having a halomethyl group reacts with the monoethanolamine (IV) as shown in the following formula. Since the polymer structure is rich in hydrogen bonding, the polymer exhibits excellent hydrophilicity and possesses extremely high resistance to an organic solvent. In addition, the polymer also shows good resistance under acidic and alkaline conditions.

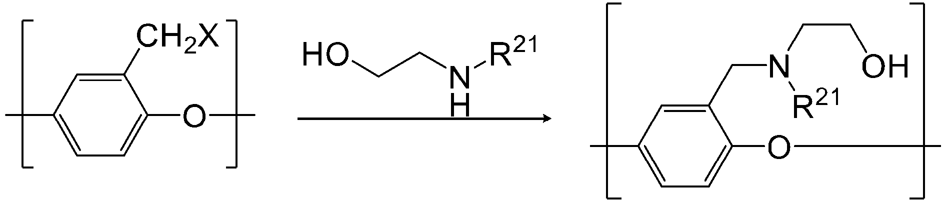

The phenolate that is prepared by transforming a phenolic hydroxy group of a di- or tri-functional phenol into a highly nucleophilic phenoxide ion in an organic solvent containing a base to enable the substitution at the benzyl position and a crosslinking reaction is also preferred. An example of a phenol includes resorcinol, hydroquinone, phloroglucinol and bisphenols. Hydroquinone and phloroglucinol are particularly preferred from the viewpoint of enhancing penetration into the interior of the membrane and increasing the reactivity of the crosslinking. An example of a suitable base includes an alkali metal hydroxide such as sodium hydroxide and potassium hydroxide, and an alkali metal carbonate such as potassium carbonate. Since a phenol is readily oxidized in air, the reaction is preferably performed under an inert gas such as nitrogen and argon. For example, when hydroquinone is used, the crosslinked structure as shown in the following formula can be formed between the benzene rings of the modified PPO. The following structure exhibits excellent resistance to acidic and alkaline conditions. Though the crosslinking is considered to be primarily intermolecular, intramolecular crosslinking may also occur.

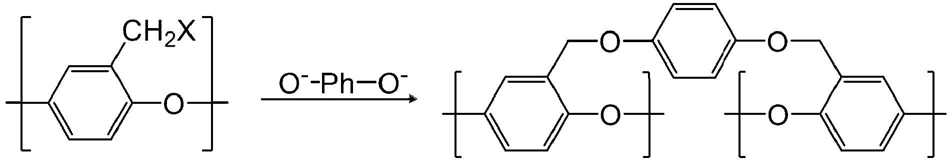

As the sulfinate, a sodium salt of hydroxymethanesulfinate can be preferably used. Hydroxymethanesulfinate is known to undergo a reaction in which a sulfone bond is formed between two halogenated benzyl compounds while releasing formaldehyde. Specifically, a membrane structure having organic solvent resistance can be obtained in which the benzyl positions of the modified PPO are crosslinked via sulfone bond as shown in the following reaction formula. Since a sulfone bond is a highly electron-withdrawing functional group, a PPO membrane highly crosslinked with a sulfinate exhibits a significant decrease in the electron density of the main-chain benzene ring. As a result, not only the resistance to acid and alkali conditions but also the resistance to an oxidative condition such as radical are expected to be improved. Though the crosslinking is considered to be primarily intermolecular, intramolecular crosslinking may also occur.

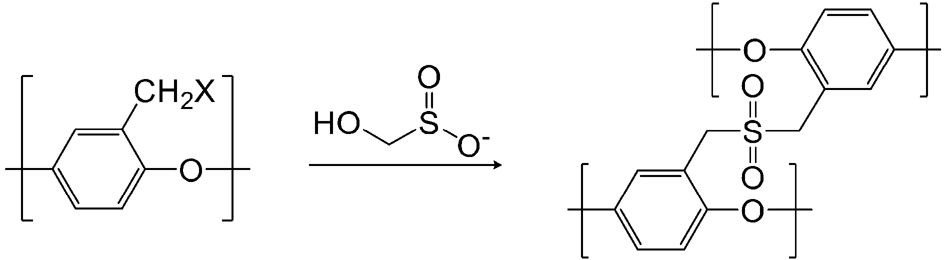

The concentration of the nucleophilic agent in the reaction between the above-described amine, phenolate or sulfinate and the modified PPO support membrane may be appropriately adjusted. For example, the concentration may be adjusted to 1% or more by mass and 10% or less by mass. In addition, an organic solvent other than water in which the modified PPO is insoluble is preferably selected from the viewpoint of improving the reaction efficiency and the penetration into the bulk of the membrane. For example, an alcohol solvent such as methanol and ethanol; a nitrile solvent such as acetonitrile; a sulfoxide solvent such as dimethyl sulfoxide; and the mixture thereof may be used. The reaction condition such as reaction temperature and reaction time may be appropriately set in consideration of the reactivity of the nucleophilic agent.

The composite separation membrane according to the present invention is an asymmetric membrane having an asymmetric structure comprising a support membrane composed of modified polyphenylene oxide and a separation functional layer comprising a crosslinked cationic polymer, wherein the modified polyphenylene oxide has a sulfonic acid group and/or a sulfate group in addition to a polar group, and the separation functional layer is formed on the support membrane.

The composite separation membrane according to the present invention exhibits high separation performance, particularly due to the separation functional layer, with respect to an insoluble substance such as microorganism, an insoluble particle and a polymer; a relatively large solute such as an amino acid; an ion such as a monovalent ion, a multivalent ion, a cation and an anion; and a neutral substances. The pore size and the porosity of the composite separation membrane according to the present invention can be adjusted in accordance with the target substance to be separated, and can be controlled by a factor such as the concentration of the PPO solution, the amount of PPO solution applied onto the base material, the basis weight of the base material, the pore size of the base material, and the amount of a pore-forming agent.

A feed solution may be passed through the composite separation membrane of the present invention in order to separate a target substance from the feed solution. Since the composite separation membrane of the present invention has a polar group in addition to a sulfonic acid group/a sulfate group, the composite separation membrane exhibits excellent resistance to an organic solvent and thus can be used to treat a feed solution containing an organic solvent. Therefore, the composite separation membrane can be suitably used as, for example, a liquid treatment membrane or a gas treatment membrane, and is particularly suitable for use as a microfiltration membrane, an ultrafiltration membrane, a nanofiltration membrane, a pervaporation membrane, a reverse osmosis membrane and a gas separation membrane.

Since the composite separation membrane of the present invention exhibits excellent resistance to an organic solvent, the composite separation membrane can be used to treat a feed solution containing an organic solvent. The organic solvent that may be contained in a feed solution is not particularly restricted. An example thereof includes an alcohol solvent such as methanol, ethanol, 2-propanol, cyclohexanol and propylene glycol monoethyl ether; a polyol solvent such as ethylene glycol, propylene glycol and glycerin; an ether solvent such as diethyl ether, t-butyl methyl ether, tetrahydrofuran, dioxane and diethylene glycol dimethyl ether; an organic acid solvent such as formic acid and acetic acid; a nitrile solvent such as acetonitrile; a ketone solvent such as acetone and methyl ethyl ketone; an ester solvent such as ethyl acetate and ethyl lactate; an aliphatic hydrocarbon solvent such as pentane, hexane and heptane; an aromatic hydrocarbon solvent such as benzene, toluene and chlorobenzene; a halogenated hydrocarbon solvent such as dichloroethane, chloroform and carbon tetrachloride; an amide solvent such as dimethylformamide, dimethylacetamide and N-methylpyrrolidone; and a sulfoxide solvent such as dimethyl sulfoxide.

The present application claims the benefit of the priority date of Japanese patent application No. 2024-000080 filed on January 4, 2024. All of the contents of the Japanese patent application No. 2024-000080 filed on January 4, 2024, are incorporated by reference herein.

### EXAMPLES

Hereinafter, the present invention is described in more detail with Examples. The present invention is however not restricted to the following Examples in any way, and it is possible to work the present invention according to the Examples with an additional appropriate change within the range of the above descriptions and the following descriptions. Such a changed embodiment is also included in the technical scope of the present invention.

### Example 1

### (1) Synthesis of brominated polyphenylene oxide

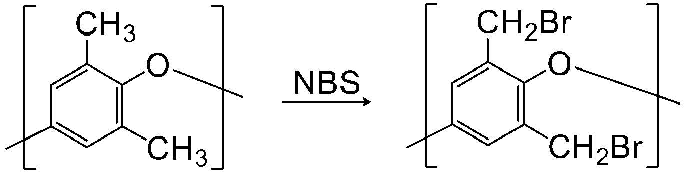

Poly(2,6-dimethyl-1,4-phenylene oxide) ("181781", manufactured by Sigma-Aldrich) (40 g) was charged into a 500 mL four-necked flask equipped with a reflux condenser, a nitrogen inlet and a stirring impeller, and chlorobenzene (240 mL) was added thereto. The polymer was dissolved to form a uniform and transparent solution under nitrogen purging. N-Bromosuccinimide (107 g) and azobisisobutyronitrile (2.0 g) as a radical initiator were added to this solution. The temperature of the reaction solution was increased to 120°C using an oil bath under vigorous stirring while the heating rate of the reaction solution was monitored. The reaction was carried out at 120°C for 6.5 hours. After the reaction solution was allowed to cool, methanol (2 L) was added, and the precipitated flake-like polymer was finely crushed using a blender. The polymer was then thoroughly washed with fresh methanol. Finally, the polymer was dried in vacuo at 60°C to obtain a powdered brominated polyphenylene oxide (BrPPO).

The produced BrPPO was analyzed by NMR; as a result, the bromination degree at the benzyl position was 1.46, and the bromination degree in the benzene ring was 0.22.

### (2) Preparation of BrPPO membrane

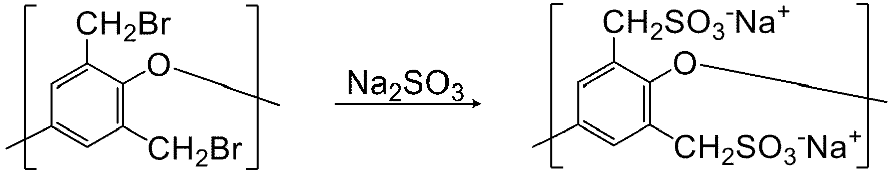

N-Methyl-2-pyrrolidone and polyethylene glycol having a molecular weight of 400 (PEG400) were added to BrPPO, and the mixture was kneaded and dissolved at 60°C for 6 hours to prepare a membrane-forming solution with a BrPPO concentration of 30 mass%.

The prepared membrane-forming solution was defoamed under reduced pressure and then applied onto a polyphenylene sulfide (PPS) nonwoven fabric having a width of 300 mm and a thickness of 120 µm using a doctor blade. The coated solution was coagulated in a 25°C water bath for 10 minutes. After coagulation, the membrane was thoroughly washed with water and air-dried to obtain the BrPPO membrane. The membrane was cut into circular pieces with a diameter of 48 mm.

The prepared membrane was immersed in a 13 mass% sodium sulfite aqueous solution at 98°C for 30 minutes. After completion of the reaction, the membrane was thoroughly washed with water. Hereinafter, the membrane in this state is referred to as the support membrane A.

The elemental composition of the membrane surface was evaluated by XPS; as a result, the sulfur content was found to be 1.6%.

### (3) Formation of separation functional layer

A copolymer of diallyldimethylammonium chloride and vinyl acetate was fully saponified to synthesize a cationic polyvinyl alcohol (CPVA) having the following constitutional units. The weight-average molecular weight of the CPVA was 64,000, and the molar fraction of the cationic monomer was 1.5 mol%.

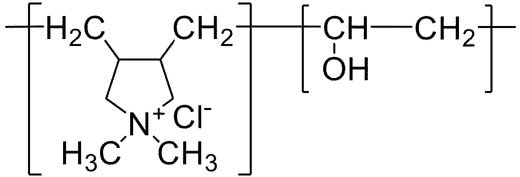

The CPVA was dissolved in pure water to prepare an aqueous solution with a CPVA concentration of 1000 mg/L, and the outer surface of the support membrane A was brought into contact with this solution at atmospheric temperature for 20 minutes to form a CPVA adsorption layer. Thereafter, the support membrane A was immersed in an aqueous solution of 1 mass% glutaraldehyde at 80°C for 24 hours to crosslink the CPVA adsorption layer. The resulting membrane was then thoroughly washed with water to obtain the composite membrane B.

### (4) Introduction of polar group

The composite membrane B was immersed in a 3 vol% methanol solution of monoethanolamine (MEA) at atmospheric temperature for 24 hours, thereby substituting the remaining bromide at non-sulfonated benzyl position in the support membrane A with MEA. After completion of the reaction, the resulting membrane was washed with methanol to obtain the composite membrane C.

For confirmation of the introduction of the polar group MEA, MEA was introduced under the same condition into the sulfonated support membrane A that did not have a separation functional layer, thereby preparing an MEA-introduced support membrane.

### Example 2

A support membrane A, a composite membrane B and a composite membrane C were prepared similarly to Example 1 except that the sulfonation reaction time was changed from 30 minutes to 5 minutes in Example 1(2). As the sulfur content of the support membrane A was 1.1%, the sulfur content slightly decreased due to the shortened sulfonation reaction time.

### Example 3

A support membrane A, a composite membrane B and a composite membrane C were prepared similarly to Example 1 except that 0.15 M tetrabutylammonium bromide (TBAB) was added to a 10 mass% sodium sulfite aqueous solution and the reaction temperature was changed from 98°C to 80°C in Example 1(2). As the sulfur content of the support membrane A was 4.3%, the sulfonation efficiency was improved by the use of a phase-transfer catalyst.

### Example 4

A support membrane A, a composite membrane B and a composite membrane C were prepared similarly to Example 1 except that a 2 mass% hydroquinone (HQ) solution in a mixed solvent of acetonitrile and dimethyl sulfoxide was used instead of the 3 vol% MEA methanol solution as a nucleophilic agent, potassium carbonate was added in an equimolar amount to the phenolic hydroxy group of HQ, and the composite membrane B was immersed at 60°C for 24 hours under a nitrogen atmosphere in Example 1(4).

### Example 5

A support membrane A, a composite membrane B and a composite membrane C were prepared similarly to Example 1 except that a 2 mass% fluoroglucinol (PG) solution in a mixed solvent of acetonitrile and dimethyl sulfoxide was used instead of the 3 vol% MEA methanol solution as the nucleophilic agent, potassium carbonate was added in an equimolar amount to the phenolic hydroxy group of PG, and the composite membrane B was immersed at 60°C for 24 hours under a nitrogen atmosphere in Example 1(4).

### Example 6

A support membrane A, a composite membrane B and a composite membrane C in which the benzyl groups of the BrPPO membrane were crosslinked via a sulfonyl group (-SO₂-) were prepared similarly to Example 1 except that a 2 mass% methanol solution and a dimethyl sulfoxide solution of sodium hydroxymethanesulfinate dihydrate (HMS-Na) were used instead of the 3 vol% MEA methanol solution as the nucleophilic agent, and the composite membrane was sequentially immersed in the methanol solution and the dimethyl sulfoxide solution at 40°C for 12 hours each in Example 1(4).

### Example 7

A support membrane A, a composite membrane B and a composite membrane C were prepared similarly to Example 1 except that polyethyleneimine (PEI, "Epomin (registered trademark) P-1000" manufactured by Nippon Shokubai, molecular weight: 70,000) was used as a cationic polymer, and the surface of the support membrane A was brought into contact with an aqueous solution prepared by adding PEI to 0.5 M NaCl aqueous solution in a concentration of 1000 mg/L and adjusting the pH for 20 minutes and then the membrane was immersed in a 0.3 mass% GA aqueous solution at room temperature for 1 hour for crosslinking in Example 1(3).

### Example 8

A support membrane A, a composite membrane B and a composite membrane C were prepared similarly to Example 1 except that polyallylamine (PAA, "PAA-HCL-10L" manufactured by Nittobo Medical, molecular weight: 100,000) was used as a cationic polymer, and the surface of the support membrane A was brought into contact with an aqueous solution prepared by adding PAA to 0.5 M NaCl aqueous solution in a concentration of 1000 mg/L and adjusting the pH for 20 minutes and then the membrane was immersed in a 0.3 mass% GA aqueous solution at room temperature for 1 hour for crosslinking in Example 1(3).

### Comparative example 1

A composite membrane B and a composite membrane C were prepared similarly except that the sulfonation of the support membrane in Example 1(2) was not performed.

### Comparative example 2

A composite membrane B was prepared similarly to Example 1(1) to 1(3).

### Test Example 1: Elemental Composition

The elemental compositions of the BrPPO membrane of Example 1, the sulfonated support membrane A, and the support membrane in which sulfonation and introduction of MEA were performed without the formation of the separation functional layer were analyzed by X-ray photoelectron spectroscopy (XPS). The apparatus and measurement condition used for the XPS analysis were described as follows.
Apparatus: K-Alpha+ manufactured by Thermo Fisher Scientific
Excitation X-ray: Monochromatic Al Kα radiation
X-Ray power: 12 kV, 2.5 mA
Photoelectron emission angle: 90°
Spot size: Approximately 200 µm diameter
Pass energy: 50 eV
Step: 0.1 eV

The analysis results are shown in Table 1 together with the calculated elemental composition of the BrPPO membrane. The calculated values were based on the bromination degree at the benzyl position of 1.46 and the bromination degree in the benzene ring of 0.22 as the NMR analysis result of the BrPPO membrane.

**[Table 1]**

| | Br (C-Br) | N | C | O | S | Na |
|---|---|---|---|---|---|---|
| BrPPO membrane (calcd.) | 15.7 | 0.0 | 74.9 | 9.4 | 0 | 0 |
| BrPPO membrane (found) | 13.5 | 1.0 | 74.0 | 11.4 | <0.1 | <0.1 |
| Sulfonated support membrane A | 9.8 | 1.4 | 67.9 | 16.6 | 1.6 | 2.6 |
| MEA-introduced sulfonated support membrane | 3.7 | 5.4 | 71.1 | 18.2 | 1.4 | <0.1 |

It is indicated that sulfonic acid groups were introduced, since the bromine content slightly decreased, whereas the sulfur, sodium and oxygen contents increased after the sulfonation treatment with sodium sulfite as shown in Table 1.

The sulfonated support membrane A was further immersed in a strongly basic MEA/methanol solution for 24 hours and then analyzed by XPS; as a result, the bromine content significantly decreased, whereas the amount of nitrogen derived from MEA increased. Since the sulfur content remained substantially unchanged, it is indicated that the sulfonic acid groups were largely retained without detachment, while MEA was successfully introduced.

Figure 2(1) and Figure 2(2) show the relationship between reaction temperature and sulfur content or bromine content in the case where the reaction time was fixed at 30 minutes with and without the use of the phase-transfer catalyst (TBAB) respectively. Figure 2(3) shows the relationship between reaction time and sulfur content (left axis) or bromine content (right axis) in the case where the reaction temperature was fixed at 98°C and the phase-transfer catalyst (TBAB) was not used.

It was found that the use of a phase-transfer catalyst clearly promotes the reaction to substitute a bromomethyl group with a sulfonic acid group as shown in Figures 2(1) and (2). In addition, it was indicated that the bromine group was progressively replaced by a sulfonic acid group as the reaction progresses as shown in Figure 2(3).

### Test example 2: Infrared Absorption Spectroscopy

The BrPPO membrane having bromomethyl groups, the sulfonated support membrane A and the support membrane subjected to sulfonation and introduction of MEA without the formation of a separation functional layer were analyzed by infrared absorption spectroscopy under the following condition. The result is shown in Figure 3.
Apparatus: "Cary 670 FTIR" manufactured by Agilent Technologies
Accessory: "Single-reflection Ge ATR accessory, Foundation Thunder Dome" manufactured by Spectra-Tech
Incidence angle: 45°
Resolution: 4 cm⁻¹
Number of scans: 64

The MEA-introduced support membrane exhibits peaks in the regions of 2800 to 3000 cm⁻¹ and around 3400 cm⁻¹ as shown in Figure 3(1). The peaks are considered to originate from the methylene group and hydroxy group of MEA, respectively.

The support membrane A exhibits the peak derived from -SO₃H compared to the BrPPO membrane as shown in Figure 3(2). The sulfonated MEA-introduced support membrane also exhibits a shoulder which is believed to be a peak derived from -SO₃H; however, it is conceivable that the peaks derived from the C-N bond of MEA and others are overlapped.

### Test Example 3: Organic solvent resistance Test

The sulfonated BrPPO membrane of Example 1(2) and the composite membrane C of Example 1(4) were cut into 1 cm squares and immersed in water or the various organic solvents listed in Table 2 either at atmospheric temperature or heated to 100°C on a hot plate for 24 hours to evaluate solvent resistance of the membranes. For solvents having a boiling point below 100°C, the immersion temperature was set to 10°C below the boiling point. The result is shown in Table 2. In the table, "NS" indicates completely insoluble, "PS" indicates soluble at elevated temperature, and "GS" indicates soluble even at atmospheric temperature.

**[Table 2]**

| Solvent | Hansen solubility parameters | | | Solubility | |
|---|---|---|---|---|---|
| | δd | δp | δh | Sulfonated BrPPO membrane | Composite membrane C |
| | Unit: MPa^{0.5} | | | | |
| water | 15.5 | 16.0 | 42.3 | NS | NS |
| ethylene glycol | 17.0 | 11.0 | 26.0 | NS | NS |
| methanol | 14.7 | 12.3 | 22.3 | NS | NS |
| ethanol | 15.8 | 8.8 | 19.4 | NS | NS |
| 2-propanol | 15.8 | 6.1 | 16.4 | NS | NS |
| acetone | 15.5 | 10.4 | 7.0 | NS | NS |
| methyl ethyl ketone | 16.0 | 9.0 | 5.1 | NS | NS |
| acetonitrile | 15.3 | 18.0 | 6.1 | NS | NS |
| ethyl acetate | 15.8 | 5.3 | 7.2 | NS | NS |
| tetrahydrofuran | 16.8 | 5.7 | 8.0 | PS | NS |
| dimethyl sulfoxide | 18.4 | 16.4 | 10.2 | NS | NS |
| N-methyl-2-pyrrolidone | 18.0 | 12.3 | 7.2 | GS | NS |
| N,N-dimethylacetamide | 16.8 | 11.5 | 9.4 | GS | NS |
| dimethylformamide | 17.4 | 13.7 | 11.3 | GS | NS |
| chloroform | 17.8 | 3.1 | 5.7 | GS | NS |
| toluene | 18.0 | 1.4 | 2.0 | GS | NS |
| chlorobenzene | 19.0 | 4.3 | 2.0 | GS | NS |
| hexane | 14.9 | 0 | 0 | NS | NS |

The polyphenylene oxide membrane into which bromomethyl groups had been introduced was insoluble in relatively polar organic solvents; however, dissolved even at atmospheric temperature in organic solvents, such as toluene and chlorobenzene, of which three Hansen solubility parameters are relatively close to each other, as shown in the results of Table 2.

On the one hand, the composite membrane C according to the present invention which has a layered crosslinked cationic polymer layer and in which a polar group has been introduced exhibited insolubility in all the solvents tested.

Thus, it was clarified that the composite membrane according to the present invention exhibits sufficient resistance to organic solvents.

### Example 4: Separation test in aqueous system using sulfonated BrPPO membrane (support membrane A)

The separation performance in an aqueous system of each support membrane A which was thoroughly wetted with water, and of the composite membrane B prior to the introduction of a polar group was evaluated using a cross-flow flat-membrane testing apparatus having a stainless-steel pressure vessel, a feed water tank and a pump.

The permeance of pure water is expressed as Lₚ. The Lₚ was determined by performing a permeation test of the membrane sample using pure water at a pressure of 15 bar and calculated by the following equation. 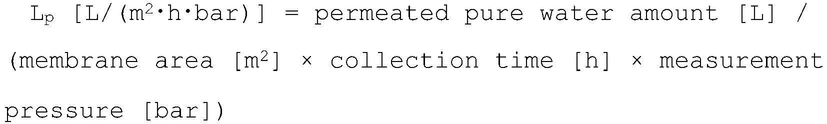 Lp [L/(m2·h·bar)] = permeated pure water amount [L] / (membrane area [m2] × collection time [h] × measurement pressure [bar])

The rejection rate of sodium chloride (NaCl) was determined by supplying an aqueous solution prepared at a concentration of 1500 mg/L at 25°C and a pressure of 15 bar for 1 hour, measuring the conductivities of the membrane-permeated water and the feed water using a conductivity meter ("CM-25R" manufactured by DKK-TOA) and calculating the value using the following formula. 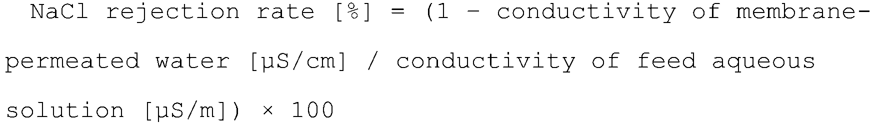 NaCl rejection rate [%] = (1 - conductivity of membrane-permeated water [µS/cm] / conductivity of feed aqueous solution [µS/m]) × 100

The rejection of a neutral molecule in an aqueous system was evaluated using sucrose (manufactured by NACALAI TESQUE, molecular weight: 342.3). A 200 mg/L sucrose aqueous solution was supplied to the above-described cross-flow flat membrane evaluation apparatus at 25°C and a pressure of 15 bar for 1 hour. Then, the water permeating through the membrane was collected, and the concentrations in the feed solution and the permeate liquid were measured using a total organic carbon analyzer ("ON-LINE TOC-VCSH" manufactured by Shimadzu) to calculate the sucrose rejection rate using the following formula. 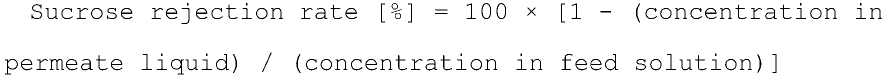 Sucrose rejection rate [%] = 100 × [1 - (concentration in permeate liquid) / (concentration in feed solution)]

**[Table 3]**

| | Separation performance of support membrane A | | | Separation performance of composite membrane B | | |
|---|---|---|---|---|---|---|
| | Pure water permeance [L/(m²·h·bar)] | NaCl rejection | Sucrose rejection | Pure water permeance [L/(m²·h·bar)] | NaCl rejection | Sucrose rejection |
| Ex. 1 | 10.3 | 45% | 38% | 1.8 | 88% | 99.5% |
| Ex. 2 | 5.4 | 54% | 61% | 1.2 | 86% | 99.2% |
| Ex. 3 | 24.2 | 28% | 18% | 4.8 | 54% | 98.0% |
| Ex. 4 | 10.3 | 45% | 38% | 1.8 | 88% | 99.5% |
| Ex. 5 | 10.3 | 45% | 38% | 1.8 | 88% | 99.5% |
| Ex. 6 | 10.3 | 45% | 38% | 1.8 | 88% | 99.5% |
| Ex. 7 | 10.3 | 45% | 38% | 6.2 | 43% | 92.0% |
| Ex. 8 | 10.3 | 45% | 38% | 6.4 | 52% | 93.0% |
| Comparative Ex. 1 | (24.5) | 0% | ND | 12.5 | 6% | 15.0% |
| Comparative Ex. 2 | 10.3 | 45% | 38% | 1.8 | 88% | 99.5% |

The data of the support membrane A of Comparative Example 1 in Table 3 corresponds to the data of a non-sulfonated support membrane, since the support membrane A of Comparative Example 1 is not sulfonated. The non-sulfonated support membrane exhibited excellent pure water permeance but was completely incapable of rejecting NaCl. The sucrose rejection rate for the support membrane of Comparative Example 1 was not measured due to the experimental results.

In addition, the pure water permeance of the composite membrane B of Comparative Example 1 was very high, but the composite membrane B was almost incapable of rejecting NaCl and sucrose. The reason may be attributed to the fact that the support membrane was not sulfonated, resulting in low adhesion between the support membrane and the crosslinked cationic polymer, which may have led to separation of the crosslinked cationic polymer from the support membrane.

On the one hand, the composite membranes B of Examples 1 to 8 exhibited excellent molecular rejection performance.

The reason why the composite membranes B of Examples 3, 7 and 8 exhibited high pure water permeance may be that the hydrophilicity of the composite membranes B were high, since a larger amount of sulfonic acid groups was introduced by sulfonating the support membrane A using a phase transfer catalyst in Example 3 and a cationic polymer which did not contain a vinyl alcohol unit was used in Examples 7 and 8. Correspondingly, the molecular rejection performance was relatively lower.

The reason why the pure water permeance and the molecular rejection performance of Comparative Example 2 are comparable to those of the Examples is that the polar group characteristic of the present invention had not yet been introduced in either case at the stage of the composite membrane B.

### Example 5: Permeance test of composite membrane in organic solvent system

Acetonitrile, N-methyl-2-pyrrolidone and toluene were used as organic solvents. The membrane sample was sufficiently wetted with each organic solvent and loaded into a stainless steel pressure-resistant vessel sealed with FFKM sealing material. The organic solvent was supplied from a 500 mL HPLC screw-cap vial to the pressure vessel using an HPLC preparative pump to evaluate the permeance. Each pure solvent was supplied at a pressure of 15 bar at the beginning of the separation evaluation, and the permeance Lₚ was determined by the following formula. 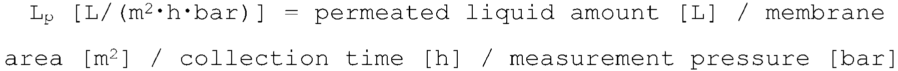 Lp [L/(m2·h·bar)] = permeated liquid amount [L] / membrane area [m2] / collection time [h] / measurement pressure [bar]

A diol-type polypropylene glycol having a molecular weight of 1000 (PPG1000; manufactured by Fujifilm Wako) was used as a marker for the separation test in an organic solvent system. A 400 mg/L PPG1000 solution was supplied at 25°C and a pressure of 15 bar. After stabilizing the operation for 6 hours, the permeate liquid from the membrane was collected. The PPG1000 peaks in the feed solution and the permeate liquid were analyzed by high-performance liquid chromatography (HPLC) equipped with a corona charged aerosol detector. The rejection rate of PPG1000 was determined on the basis of the area ratio of molecular weight components at the peak tops before and after permeation. For the separation test using toluene as the solvent, the toluene was completely evaporated once, and the same volume of ethanol was added and thoroughly mixed prior to HPLC evaluation. 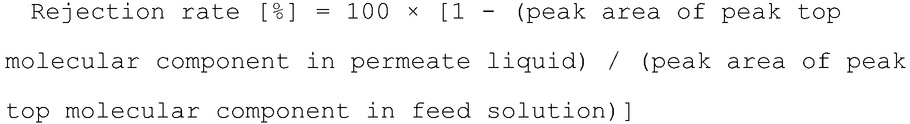 Rejection rate [%] = 100 × [1 - (peak area of peak top molecular component in permeate liquid) / (peak area of peak top molecular component in feed solution)]

The measurement condition for HPLC is described as follows.
Apparatus: Thermo Fisher Scientific Vanquish
Column: Waters BEH C18, 2.1 × 150 mm
Mobile phase: A: ultrapure water, B: acetonitrile
   0 to 15 min: 5% B in A
   15 to 20 min: 60% B in A
   20 to 25 min: 100% B
Flow rate: 0.25 mL/min
Column temperature: 40°C
Injection volume: 5 µL
Detection: Charged aerosol detector (CAD)
Drying tube temperature: 35°C

**[Table 4]**

| | Separation performance of composite membrane C | | | | | |
|---|---|---|---|---|---|---|
| | Acetonitrile | | N-Methyl-2-pyrrolidone | | Toluene | |
| | Pure solvent permeance [L/(m²·h·bar)] | PPG1000 rejection | Pure solvent permeance [L/(m²·h·bar)] | PPG1000 rejection | Pure solvent permeance [L/(m²·h·bar)] | PPG1000 rejection |
| Ex. 1 | 2.2 | >99.0% | 1.2 | >99.0% | 0.12 | >99.0% |
| Ex. 2 | 1.8 | >99.0% | 0.9 | >99.0% | 0.08 | >99.0% |
| Ex. 3 | 3.4 | 98.2% | 1.6 | 97.7% | 0.19 | 97.5% |
| Ex. 4 | 2.1 | >99.0% | 0.8 | >99.0% | 0.11 | >99.0% |
| Ex. 5 | 2.6 | >99.0% | 1.2 | >99.0% | 0.14 | >99.0% |
| Ex. 6 | 1.8 | >99.0% | 0.7 | >99.0% | 0.08 | >99.0% |
| Ex. 7 | 2.4 | 96.4% | 0.6 | 95.4% | 0.07 | 92.5% |
| Ex. 8 | 2.5 | 97.2% | 0.6 | 96.2% | 0.08 | 93.5% |
| Comparative ex. 1 | 4.3 | 77.0% | 1.4 | 74.0% | 0.16 | 76.0% |
| Comparative ex. 2 | Not evaluated due to swelling or dissolution | | | | | |

The molecular rejection performance of the composite separation membrane of Comparative Example 1 was insufficient as shown in the result shown in Table 4. The reason may be that the support membrane was not sulfonated and thus the cationic polymer was not adsorbed and the separation functional layer was not adequately formed. In other words, the membrane of Comparative Example 1 is essentially equivalent to a solvent-resistant support membrane composed of modified PPO and becomes highly polar due to the monoethanolamine; as a result, filtration in an organic solvent is possible, and although insufficient, the membrane exhibits some separation performance.

The composite membrane B of Comparative Example 2 without a polar group swelled or dissolved in all three tested organic solvents. Thus, it is found that the composite membrane is entirely unsuitable as a separation membrane in an organic solvent system.

In contrast, a cationic polymer layer functioning as a separation functional layer could be effectively formed on the support membrane A of the Examples, in which sulfonic acid groups were introduced into polyphenylene oxide via methylene groups by the present invention. In addition, the membrane exhibited high insolubility toward organic solvents and thus exhibited excellent separation performance both in an aqueous system and in an organic solvent system.

## Claims

1. A composite separation membrane,
comprising a support membrane and a separation functional layer,
wherein the support membrane comprises a modified polyphenylene oxide,
the separation functional layer comprises a crosslinked cationic polymer,
the modified polyphenylene oxide comprises a sulfonic acid group and/or a sulfate group, and a polar group, and
the separation functional layer is formed on the support membrane.

2. The composite separation membrane according to claim 1, wherein the benzene ring of the modified polyphenylene oxide is substituted with the polar group and the sulfonic acid group and/or the sulfate group through a linker group.

3. The composite separation membrane according to claim 2, wherein the benzene ring of the modified polyphenylene oxide is substituted with a sulfomethyl group.

4. The composite separation membrane according to claim 1, wherein the polar group is 1 or more polar groups selected from a hydroxy group, an ether group, a sulfonyl group and an amino group.

5. The composite separation membrane according to claim 1, wherein the cationic polymer is a cationic poly(vinyl alcohol) copolymer comprising a constitutional unit having a quaternary ammonium cationic group.

6. The composite separation membrane according to claim 1, wherein the cationic polymer is 1 or more polyamines selected from a polyethyleneimine, a polyvinylamine and a polyallylamine.

7. A method for producing a composite separation membrane, the method comprising the steps of:
preparing a support membrane using polyphenylene oxide,
introducing a sulfonic acid group and/or a sulfate group into the support membrane by contacting the support membrane with a sulfonating agent,
forming a cationic polymer layer on the support membrane by contacting the support membrane having the sulfonic acid group and/or the sulfate group with an aqueous solution comprising a cationic polymer,
crosslinking the cationic polymer in the cationic polymer layer, and
introducing a polar group into the polyphenylene oxide in the support membrane.

8. The method according to claim 7, wherein the sulfonic acid group is introduced into a halomethyl group by contacting the support membrane comprising the polyphenylene oxide wherein the halomethyl group is introduced into the benzene ring with an aqueous solution comprising a sulfite salt as the sulfonating agent.

9. The method according to claim 7, wherein the polar group is introduced by reacting the polyphenylene oxide having a halomethyl group introduced into the benzene ring thereof with a monoethanolamine represented by the following formula (IV): 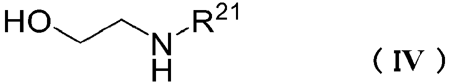 wherein R²¹ is H or a C₁₋₆ alkyl group.
